# EUROPEAN PATENT SPECIFICATION

(11) **EP 3 597 481 B1**
(45) Date of publication and mention of the grant of the patent: **07.04.2021**
(21) Application number: 19000259.2
(22) Date of filing: 28.05.2019
(51) Int. Cl.: B60P 3/079

(54) **FASTENING SYSTEM FOR HOLDING BELTS**
BEFESTIGUNGSSYSTEM ZUM HALTEN VON GURTEN
SYSTÈME DE FIXATION POUR CEINTURES DE RETENUE

(30) Priority: 19.07.2018 IT 201800007338
(43) Date of publication of application: 22.01.2020
(73) Proprietor: Rolfo S.p.A., 12042 Bra (CN) (IT)
(72) Inventor: Rolfo, Giorgio, I-12042 BRA (CN) (IT); Arnulfo, Elio, I-12042 BRA (CN) (IT)
(74) Representative: Garavelli, Paolo

(56) References cited:
- EP-A1- 2 998 158
- US-A- 3 853 347
- US-A- 4 960 353

## Description

The present invention refers to a fastening system for holding belts aimed in particular to be used for transporting motor vehicles on loading flatbeds.

In the world of transport of vehicles, the fastening systems of vehicles to the loading flatbeds, for example car transporters, have evolved mostly regarding their practical use and experience. From the earliest improvised systems, at least in Europe, the evolution went towards systems based on loading flatbeds equipped with oval holes deep drawn upwards, with the double function of increasing the adherence of tires and providing a practically continuous series of fastening positions, and of a mixture of the socalled "non-slip wedges" which are fastened to oval holes and holding belts with threee points equipped with fastening systems made as simple hooks, also aimed to be mainly inserted into the oval holes. Number and arrangement of wedges and belts are often determined by the loading standards issued by the various manifacturing companies, and also by laws (see, for example, German Law VDI 2700 8.1 and 8.2).

In such laws, however, there are only a few requirements, since embodiments and forces, which must be taken into account for the correct dimensioning of such belts and/or wedges, are not described in detail.

The recent technical evolution in the car sector has also introduced suspension systems which, when the car is transported on a loading flatbed, induce greater accelerations and forces on traditionally used fastening systems. The experience shows that, in some situations, a sheet with oval holes has permanent distortions next to the contact area with the belt hook. This, in addition to deteriorating the sheet, also causes the decrease of the belt pre-load, and therefore of the fastening force given by the vehicle wheel transported on the loading flatbed. Thereby, a decrease of the vehicle fastening safety.

The problem with known fastening systems for the holding belts therefore is that thez currently appear as universal hooks, whose shape is not optimum to be fastened onto the oval holes: in fact, since the contact areas between such hooks and the oval holes of the loading flatbed inside which they are inserted are very small (ideally spots), even relatively low forces can create very high tensions and pressures, which permanently deform the contact area itself.

EP2998158 instead discloses a holed sheet for semi-trailers, trailers and/or railcars, for transporting vehicles, equipped with a fastening counter-support device, made as a longitudinal rail and placed below the loading surfaces of the flatbed, such device being equipped with dampening means, made as fastening rods connected to such rail, to absorb the forces acting at a right angle with respect to the loading surfaces and capable of being generated through fastening means, such as fastening hooks and/or belts connected to such dampening means. In such system it is obvious how, having available dampening means directly in the fastening counter-suppport device, both weights and manufacturing costs for the relevant sheet are strongly increased. US 4 960 353 A1 discloses a fastening system according to the preamble of claim 1.

Therefore, object of the present invention is solving the above prior art problems, by providing a fastening system for holding belts, aimed in particular to be used for transporting motor vehicles on loading flatbeds, comprising fastening elements which can be festened directly to the oval holes of a sheet and allow not transmitting on spots the tension directly to such oval holes, but transmitting such tension in order to avoid the concentration of tension in the edges of the oval holes, which can bring about localized deformations.

Another object of the present invention is providing a fastening system for holding belts, aimed in particular to be used for transporting motor vehicles on loading flatbeds, further comprising suitable girders to be arranged below any already existing flatbed and which allow not only to avoid a tension concentratione in the edges of the oval holes which can bring about localized deformations, but also to transmit the tension directly to structural parts thereof.

The above and other objects and advantages of the invention, as will result from the following description, are obtained with a fastening system for holding belts as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears in the enclosed claims.

The present invention will be better described by some preferred embodiments thereof, provided as a non-limiting example, with reference to the enclosed drawings, in which:
- Figure 1 shows a side view of a preferred embodiment of the fastening system according to the present invention in an operating position according to a preferred use mode;
- Figure 2 shows a top perspective view of the fastening system of Figure 1;

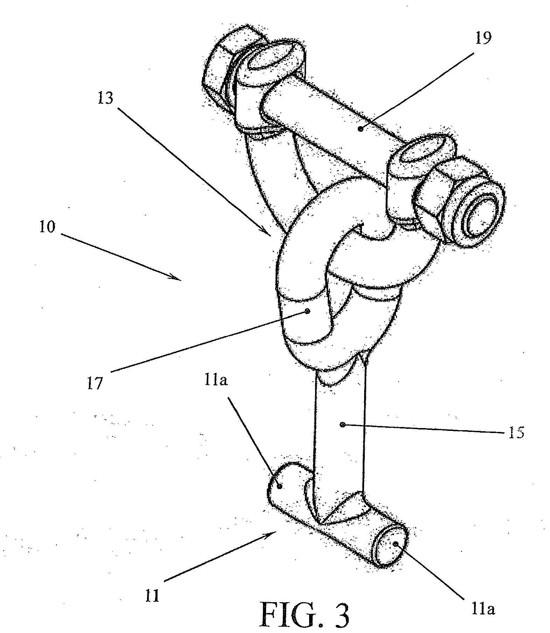

- Figure 3 shows a perspective view of a preferred embodiment of a fastening element of the fastening system according to the present invention;

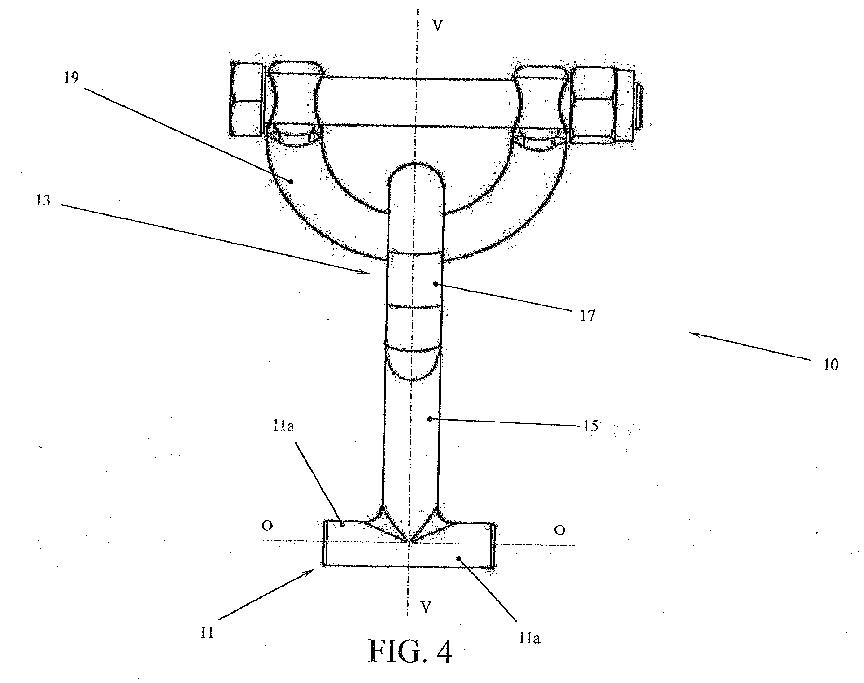

- Figure 4 shows a front view of the fastening element of Figure 2;

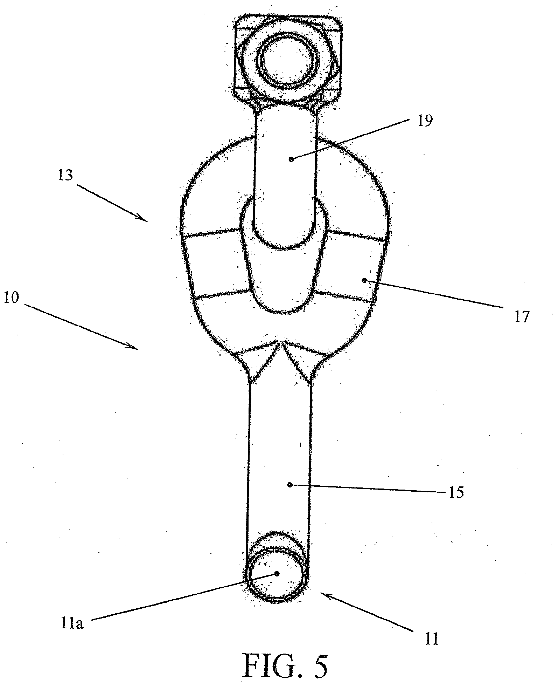

- Figure 5 shows a side view of the fastening element of Figures 2 and 3;

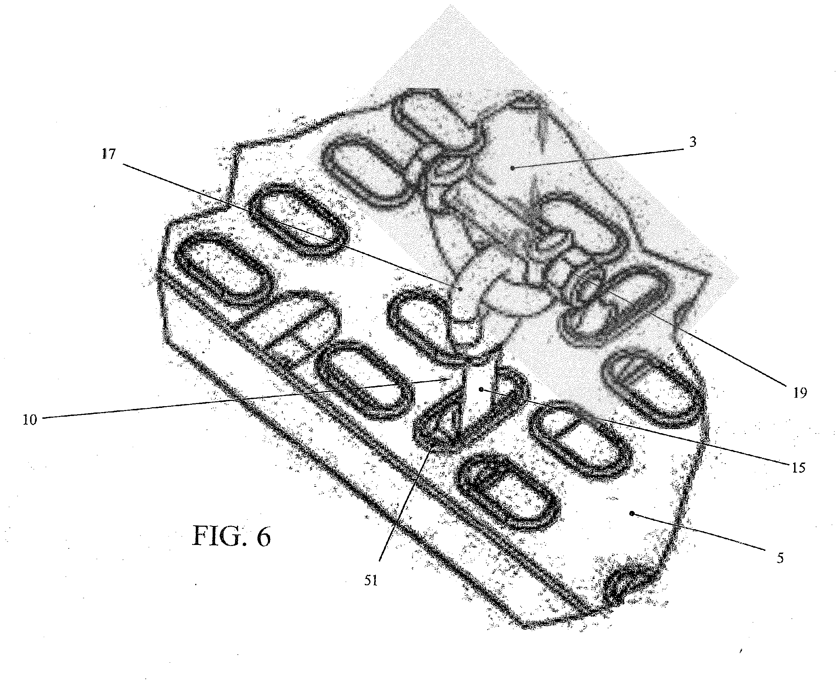

- Figure 6 shows a top perspective view of the fastening element of the fastening system according to the present invention in an operating position;

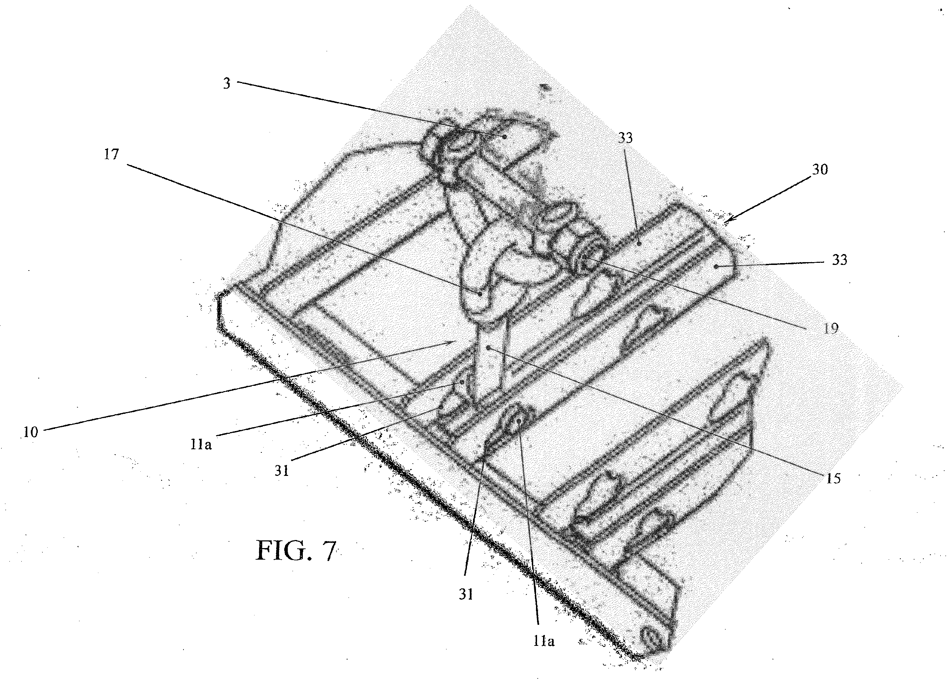

- Figure 7 shows the perspective view of Figure 6 without the loading flatbed;

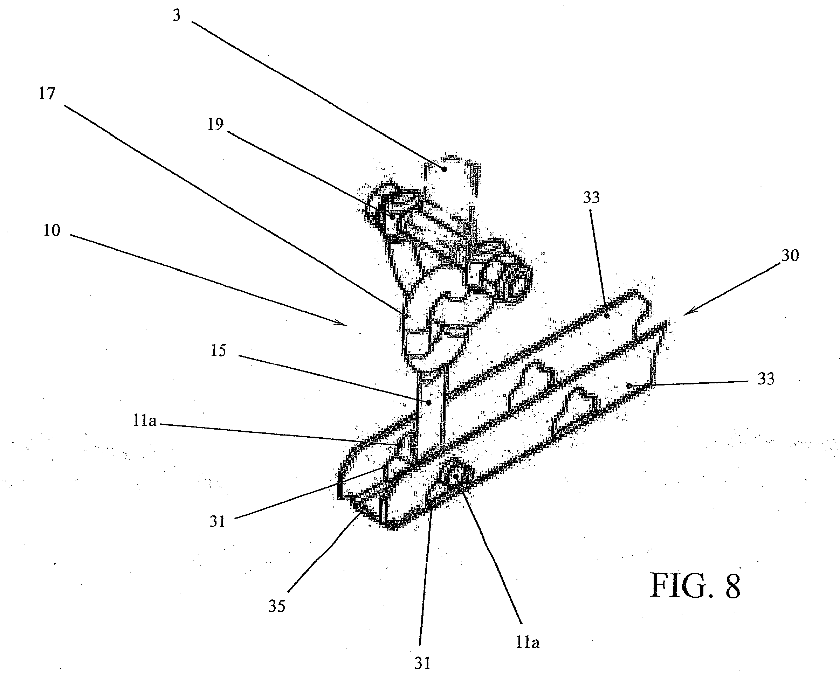

- Figure 8 shows a top detailed perspective view of Figure 7;
- Figure 9 shows a side view of Figure 7;
- Figure 10 shows a sectional view along section line D-D of Figure 9; and
- Figures 11 to 14 show perspective views of some steps of laying the fastening element of the fastening system according to the present invention.

With reference to the Figures, it is possible to note that the fastening system 1 for holding belts 3 according to the present invention, aimed in particular to be used for transporting motor vehicles on at least one loading flatbed 5 comprising one or more through-openings 51 (typically the oval holes of known flatbeds), comprises at least one fastening element 10 interposed between at least one belt 3 and such flatbed 5, the fastening element 10 being equipped with at least one fastening portion 11 and with at least one connection or transmission portion 13 of the belt 3, the fastening element 1 being able to pass from a first operating position in which the fastening portion 11 is passing through at least one opening 51 to a second operating position in which the fastening portion 11 is prevented from going out from the opening 51, and vice versa.

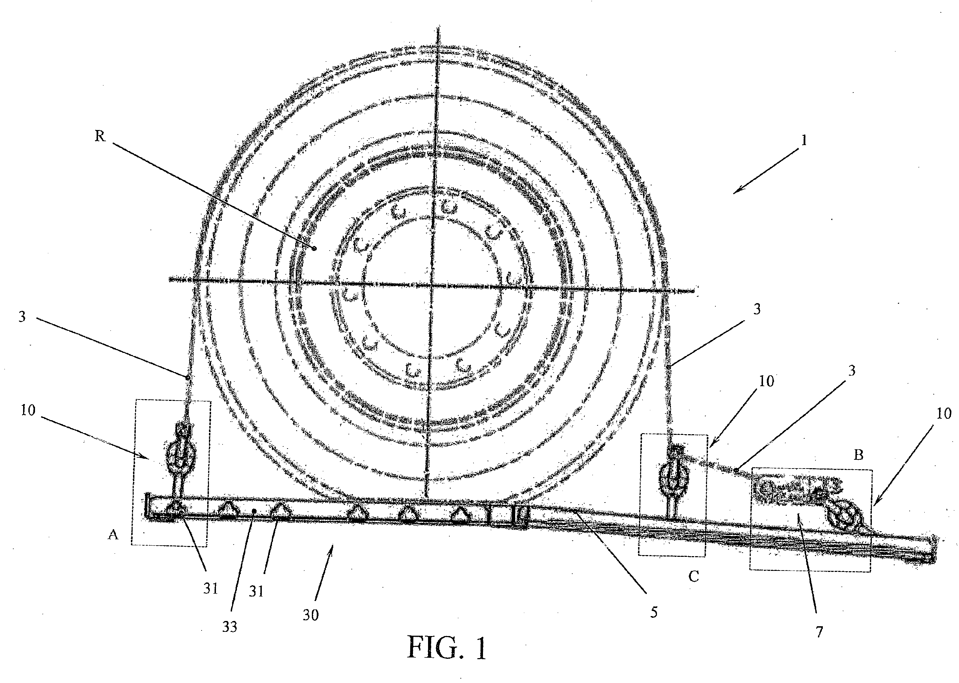

In particular, the fastening element 10 comprises at least one stem 15, preferably with round section, joining the fastening portion 11 and the connecting portion 13, the connecting portion 13 being equipped with at least one hook or eyelet 17 designed to allo the connection with the belt as a direct connection of a terminal portion of the belt 3 itself (such as, for example, in the operating configuration shown in box A of Figure 1) or by interposing at least one tensioning device 7 (such as, for example, in the operating configuration shown in box B of Figure 1), or the transmission of an intermediate portion of the belt 3 (such as, for example, in the operating configuration shown in box C of Figure 1), for example also by interposing at least one suitable connecting means, like a shackle 19 with screw-type transverse pin.

The fastening portion 11 is shaped substantially as a reverse "T" and comprises two opposite appendixes 11a, going out axially, along a O-O axis, from the end of the stem 15 in a substantially perpendicular position with respect to a longitudinal axis V-V of the stem 15 itself.

Preferably, the fastening system 1 according to the present invention can further comprise at least one connecting girder 30, preferably also having structural functions, to be arranged below any flatbed 5 (of the type known in the art), the girder 30 being equipped with at least one longitudinal seat 31, preferably placed next to at least one through-opening 51 of the flatbed 5. When there is a girder 30, the fastening element 10 can then pass from the first operating position in which the fastening portion 11 is passing through the opening 51 and is unconstrained from the seat 31, to a second operating position in which the fastening portion 11 engages at least one seat 31 and is prevented from going out from the opening 51, and vice versa.

In particular, the girder 30 comprises at least two parallel and facing, longitudinal surfaces 33, each of the surfaces 33 being equipped with at least one seat 31 adapted to be engaged by a respective appendix 11a of the fastening portion 11 when the fastening element 10 is in the second operating position: in particular, the section of the appendixes 11a is preferably circular to allow their correct abutment in the seat 31 according to different angles.

Preferably, the girder 30 has a "U"-shaped section, composed of the surfaces 33 and at least one connecting base 35 of the surfaces 33.

Advantageously, the suitable dimensioning of the diameter of the appendixes 11a allows distributing the pressure induced by the belt 3 in order to avoid dangerous tension concentrations, a localized plasticization, deformations and burrs on the edge, as happened with the classic prior art hook.

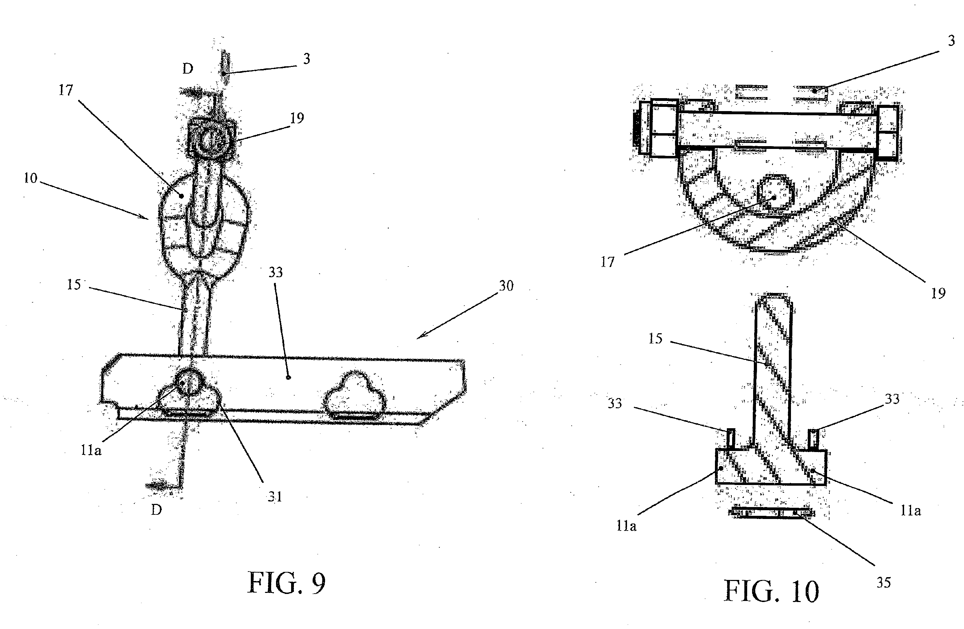

The arrangements in the shaping of the various parts of the system 1 according to the present invention, and in particular of the fastening element 10 and possibly, if present, of the related girder 30, therefore allow the fastening portion 11 to perform small rotations and adaptations inside the opening 51 and/or the respective seats 31, allowing the belt 3 to be always arranged in its correct position. In the sectional view of Figure 10, it can be seen, in particular, how the two appendixes 11a of the fastening portion 11 rest on the seat 31, with a variable thickness depending on the type of load to which the vehicle is aimed.

Advantageously, the seats 31 for the appendixes 11a of the fastening portion 11 can be directly obtained in the surfaces 33 of the girder 30, typically in through-sheet.

The fastening element 10 as described above can then be inserted, in its first operating position, through an opening 51 (oval hole) of any prior art flatbed 5, and then taken to its second operating position to prevent it from going out and allow a fastening to the flatbed 5 of the related belt 3. In particular, when the fastening element 10 is in its first operating position, it can be made pass through the opening of the flatbed. Afterwards, it is enough to rotate the fastening element by about 90° around axis V-V to take the appendixes 11a to engage from below the opening 51 and prevent it from going out, for example under the traction action of the belt connected thereto.

Obviously, it is possible, performing the above described step backwards, to extract the fastening element 10 from the opening 51.

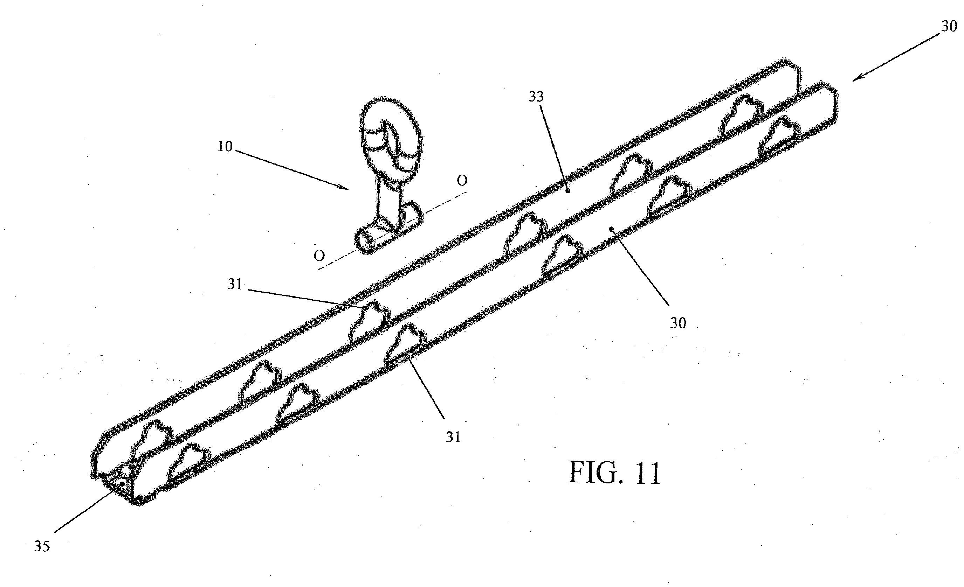

With reference to Figures 11 to 14, some steps of laying a fastening element 10 of the fastening system 1 according to the present invention are shown, also comprising the girder 30 and through at least one opening (oval hole, not shown) of a loading flatbed 5.

Starting then from the position in Figure 11, the fastening element 10 is in its first operating position, namely it is able to pass through an opening (not shown) of the flatbed and has the fastening portion unconstrained from the seats 31 of the girder 30.

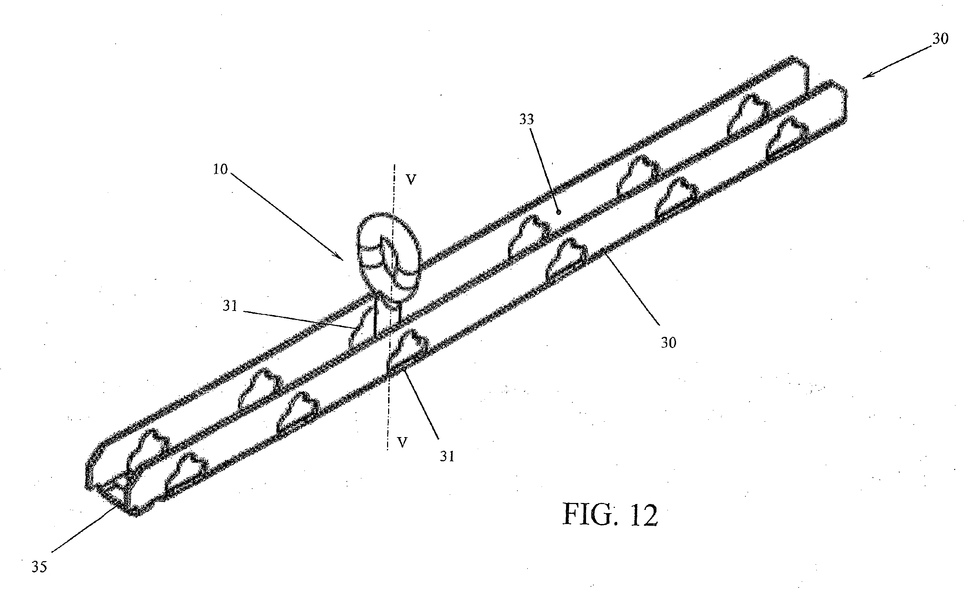

Keeping the axis O-O of the fastening portion 11 substantially parallel to the girder 30, insert the appendixes 11a between the surfaces 33 next to a pair of facing seats 31, as shown, in particular, in Figure 12.

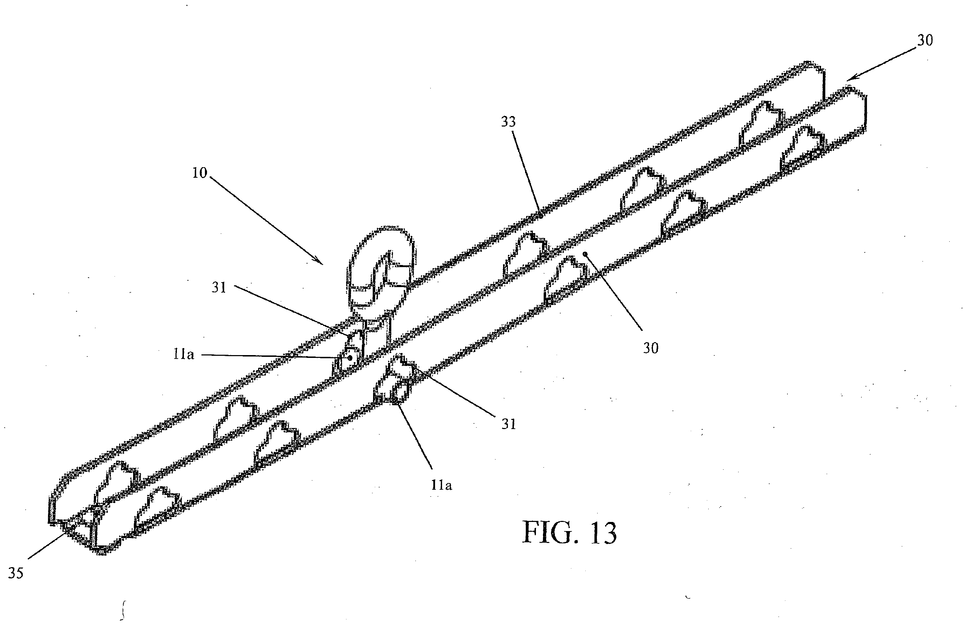

Afterwards, rotate the fastening element 10 by about 90° around axis V-V, taking the fastening element 10 in its second operating position with the appendixes 11a placed in order to internally engage their respective seats 31, as shown, in particular, in Figure 13.

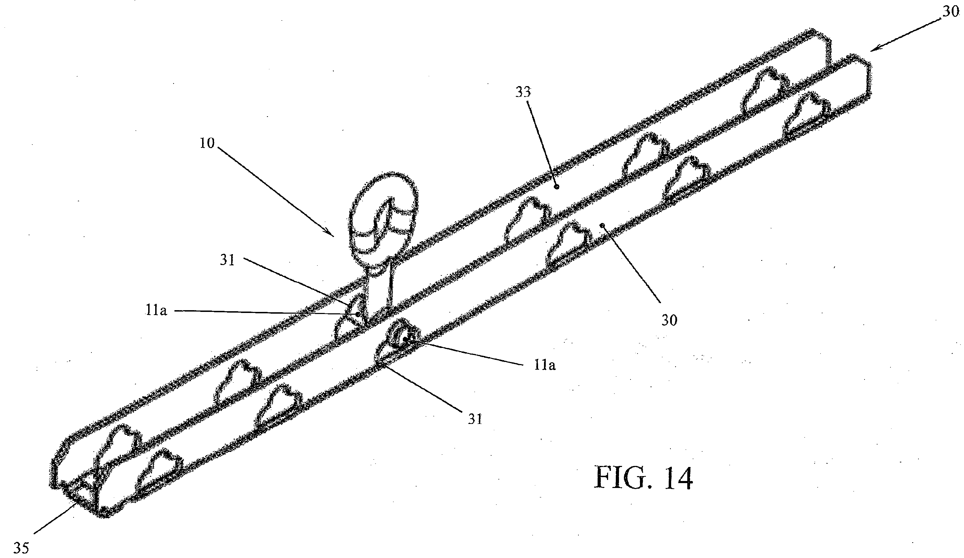

Then, by placing the fastening element 10 in traction through the tension exerted by the belt connected to its own connecting portion 13, the appendixes 11a abut against their respective seats 31, as shown, in particular, in Figure 14.

Obviously, it is possible, performing the above described step backwards, to extract the fastening element 10 from the girder 30.

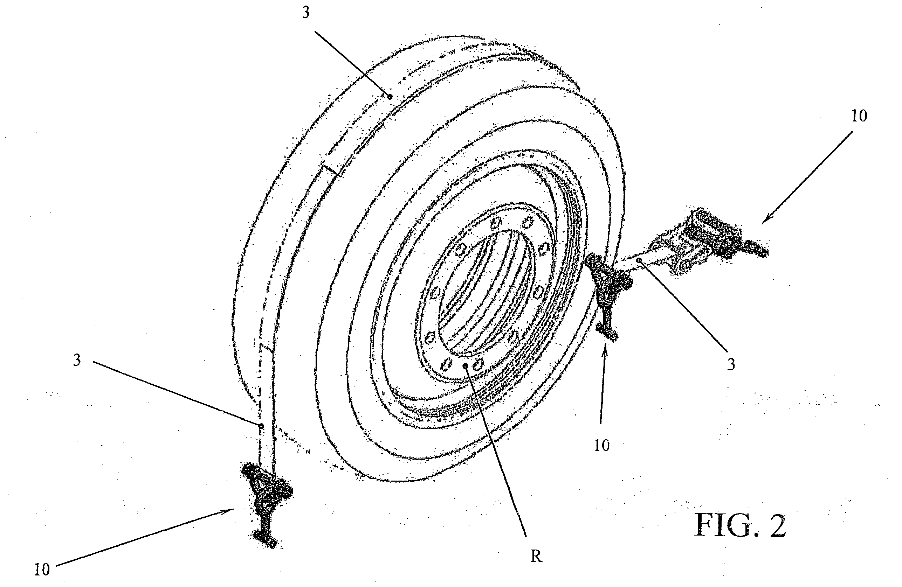

Figures 1 and 2 show, as an example, the fastening system according to the present invention applied to a preferred use mode for fastening a wheel R of a vehicle to the flatbed 5 through a belt 3 partially wound around the tire tread of the wheel R and equipped with three fastening points A, B, C to the girder 30 by interposing respective fastening elements 10 inserted through the openings 51 of the flatbed 5, and possibly put under traction through at least one tensioning device 7 (usually a ratchet).

## Claims

1. Fastening system (1) for holding belts (3), aimed to be used for transporting motor vehicles on loading flatbeds (5) comprising one or more through-openings (51), said fastening system (1) comprising at least one fastening element (10) interposed between at least one of said belts (3) and said flatbed (5), said fastening element (1) being equipped with at least one fastening portion (11) and with at least one connection or transmission portion (13) of said belt (3), said fastening element (10) being able to pass from a first operating position in which said fastening portion (11) is passing through at least one of said openings (51) to a second operating position in which said fastening portion (11) is prevented from going out from said opening (51), and vice versa, said fastening system (1) comprising at least one connecting girder (30) to be arranged below said flatbed (5), said girder (30) being equipped with at least one longitudinal seat (31), said fastening element (10) being able to pass from said first operating position in which said fastening portion (11) is passing through said opening (51) and is unconstrained from said seat (31) to said second operating position in which said fastening portion (11) engages at least one of said seats (31) and is prevented from going out from said opening (51), and vice versa,
wherein said fastening portion (11) is shaped substantially as a reverse "T" , **characterised in that** said fastening portion comprises due opposite appendixes (11a) axially going out of an end of said stem (15) in a substantially perpendicular position with respect to a longitudinal axis of said stem (15), and said girder (30) comprises at least two parallel and facing, longitudinal surfaces (33), each of said surfaces (33) being equipped with at least one of said seats (31) adapted to be engaged by a respective one of said appendixes (11a) of said fastening portion (11) when said fastening element (10) is in said second operating position.

2. Fastening system (1) according to the previous claim, **characterized in that** said fastening element (10) comprises at least one stem (15) joining said fastening portion (11) and said connecting portion (13) .

3. Fastening system (1) according to any one of the previous claims, **characterized in that** said connecting portion (13) is equipped with at least one hook or eyelet (17).

4. Fastening system (1) according to the previous claim, **characterized in that** said hook or eyelet (17) is connected to said belt by interposing at least one connecting means.

5. Fastening system (1) according to the previous claim, **characterized in that** said connecting means is at least one shackle (19) with screw-type transverse pin.

6. Fastening system (1) according to claim 1, **characterized in that** a section of said appendixes (11a) is circular.

7. Fastening system (1) according to claim 1, **characterized in that** said girder (30) has structural functions.

8. Fastening system (1) according to any one of the previous claims, **characterized in that** said longitudinal seat (31) is placed next to at least one through-opening (51) of said flatbed (5).

9. Fastening system (1) according to any one of the previous claims, **characterized in that** said girder (30) has a "U"-shaped section composed of said surfaces (33) and at least one connecting base (35) of said surfaces (33).

## Patentansprüche

1. Verankerungssystem (1) für Rückhaltegurte (3), das zum Transport von Kraftfahrzeugen auf Ladeplattformen (5) vorgesehen ist, die eine oder mehrere Durchgangsöffnungen (51) umfassen, wobei das Verankerungssystem (1) mindestens eine Verankerung umfasst Element (10), das zwischen mindestens einem der Riemen (3) und der Plattform (5) angeordnet ist, wobei das Verankerungselement (1) mit mindestens einem Hakenabschnitt (11) und mindestens einem Abschnitt (13) zur Verbindung oder ausgestattet ist Rückführung eines Riemens (3), wobei das Verankerungselement (10) von einer ersten Betriebsposition, in der der Kupplungsabschnitt (11) durch mindestens eine der Öffnungen (51) verläuft, zu einer zweiten Betriebsposition gelangen kann, in der Es wird verhindert, dass der Hakenabschnitt (11) aus der Öffnung (51) herauskommt, und umgekehrt, wobei das Verankerungssystem (1) mindestens ein Verbindungslängselement (30) umfasst, das unter der Plattform (5) angeordnet sein soll, wobei der Holm (30) mit Alme ausgestattet sein einen Längssitz (31), wobei das Verankerungselement (10) von der ersten Betriebsposition, in der der Kupplungsabschnitt (11) durch die Öffnung (51) verläuft, passieren kann und von dem Sitz (31) zum zweiten Betrieb freigegeben wird Position, in der der Hakenabschnitt (11) in mindestens einen der Sitze (31) eingreift und daran gehindert ist, aus der Öffnung (51) herauszukommen, und umgekehrt;
in dem der Kopplungsabschnitt (11) im wesentlichen die Form eines umgekehrten "T" hat,
**gekennzeichnet durch** die Tatsache, dass der Kopplungsabschnitt zwei gegenüberliegende Anhänge (11a) umfasst, die axial aus einem Ende des Schafts (15) in einer im Wesentlichen senkrechten Position in Bezug auf eine Längsachse des Schafts (15) und des Längselements (30) herausragen) umfasst mindestens zwei Längsflächen (33), die parallel und einander zugewandt sind, wobei jede der Flächen (33) mit mindestens einem der Sitze (31) ausgestattet ist, die von einem jeweiligen der Anhänge (11a) eingerastet werden können, des Hakenabschnitts (11), wenn sich das Verankerungselement (10) in der zweiten Betriebsposition befindet.

2. Verankerungssystem (1) nach dem vorhergehenden Anspruch, **dadurch gekennzeichnet, dass** das Verankerungselement (10) mindestens einen Schaft (15) umfasst, der den Hakenabschnitt (11) und den Verbindungsabschnitt (13) verbindet.

3. Verankerungssystem (1) nach einem der vorhergehenden Ansprüche, das **dadurch gekennzeichnet ist, dass** der Verbindungsabschnitt (13) mit mindestens einem Haken oder einer Öse (17) ausgestattet ist.

4. Verankerungssystem (1) nach dem vorhergehenden Anspruch, **gekennzeichnet durch** die Tatsache, dass der Haken oder die Öse (17) durch Zwischenschalten von mindestens einem Verbindungsmittel mit dem Riemen verbunden ist.

5. Verankerungssystem (1) nach dem vorhergehenden Anspruch, **dadurch gekennzeichnet, dass** das Verbindungsmittel mindestens ein Schäkel (19) mit einem Schraubenquerstift ist.

6. Verankerungssystem (1) nach dem vorhergehenden Anspruch, **dadurch gekennzeichnet, dass** ein Abschnitt der Anhänge (11a) kreisförmig ist.

7. Verankerungssystem (1) nach Anspruch 1, **dadurch gekennzeichnet, dass** das Längsträger (30) strukturelle Funktionen hat.

8. Verankerungssystem (1) nach einem der vorhergehenden Ansprüche, **gekennzeichnet dadurch, dass** der Längssitz (31) in Übereinstimmung mit mindestens einer Durchgangsöffnung (51) der Plattform (5) positioniert ist.

9. Verankerungssystem (1) nach einem der vorhergehenden Ansprüche, **gekennzeichnet durch** die Tatsache, dass das Längsträger (30) mit einem "U" - Abschnitt geformt ist, der aus den Oberflächen (33) und mindestens einer Basis (35) besteht, zum Verbinden der Flächen (33).

## Revendications

1. Système d'ancrage (1) pour ceintures de retenue (3), destiné à être utilisé pour le transport de véhicules automobiles sur des plates-formes de chargement (5) comportant une ou plusieurs ouvertures traversantes (51), ledit système d'ancrage (1) comprenant au moins un ancrage élément (10) interposé entre au moins une desdites ceintures (3) et ladite plate-forme (5), ledit élément d'ancrage (1) étant équipé d'au moins une partie d'accrochage (11) et d'au moins une partie (13) de connexion ou retour d'une dite courroie (3), ledit élément d'ancrage (10) pouvant passer d'une première position de fonctionnement dans laquelle ladite partie d'accouplement (11) passe par au moins l'une desdites ouvertures (51) à une seconde position de fonctionnement dans laquelle ladite partie d'accrochage (11) est empêchée de sortir de ladite ouverture (51), et vice versa, ledit système d'ancrage (1) comprenant au moins un élément longitudinal de connexion (30) à disposer sous ladite plate-forme (5), ledit longeron (30) étant équipé d'alme un siège longitudinal (31), ledit élément d'ancrage (10) étant apte à passer de ladite première position de fonctionnement dans laquelle ladite partie d'accouplement (11) traverse ladite ouverture (51) et est libérée dudit siège (31) vers ledit deuxième fonctionnement position dans laquelle ladite partie d'accrochage (11) vient en prise avec au moins l'un desdits sièges (31) et est empêchée de sortir de ladite ouverture (51), et vice versa,
dans lequel ladite partie d'accouplement (11) a sensiblement la forme d'un "T" inversé,
**caractérisé par le fait que** ladite partie d'accouplement comprend deux appendices opposés (11a) faisant saillie axialement depuis une extrémité de ladite tige (15) dans une position sensiblement perpendiculaire par rapport à un axe longitudinal de ladite tige (15), et ledit élément longitudinal (30)) comprend au moins deux surfaces longitudinales (33), parallèles et se faisant face, chacune desdites surfaces (33) étant équipée d'au moins un desdits sièges (31) apte à être engagé par l'un respectif desdits appendices (11a) de ladite partie d'accrochage (11) lorsque ledit élément d'ancrage (10) est dans ladite seconde position opérationnelle.

2. Système d'ancrage (1) selon la revendication précédente, **caractérisé en ce que** ledit élément d'ancrage (10) comprend au moins une tige (15) reliant ladite partie d'accrochage (11) et ladite partie de liaison (13).

3. Système d'ancrage (1) selon l'une quelconque des revendications précédentes, **caractérisé en ce que** ladite partie de connexion (13) est équipée d'au moins un crochet ou œillet (17).

4. Système d'ancrage (1) selon la revendication précédente, **caractérisé par le fait que** ledit crochet ou œillet (17) est relié à ladite ceinture par l'interposition d'au moins un moyen de liaison.

5. Système d'ancrage (1) selon la revendication précédente, **caractérisé en ce que** ledit moyen de liaison est au moins une manille (19) avec un axe transversal à vis.

6. Système d'ancrage (1) selon la revendication précédente, **caractérisé en ce qu'**une section desdits appendices (11a) est circulaire.

7. Système d'ancrage (1) selon la revendication 1, **caractérisé en ce que** ledit élément longitudinal (30) a des fonctions structurelles.

8. Système d'ancrage (1) selon l'une quelconque des revendications précédentes, **caractérisé en ce que** ledit siège longitudinal (31) est positionné en correspondance avec au moins une ouverture traversante (51) de ladite plateforme (5).

9. Système d'ancrage (1) selon l'une quelconque des revendications précédentes, **caractérisé par le fait que** ledit élément longitudinal (30) est conformé avec un profilé en "U" composé desdites surfaces (33) et d'au moins une embase (35) pour relier lesdites surfaces (33).
